**Europäisches Patentamt**

**European Patent Office**

**Office européen des brevets**

(19)

(11) Veröffentlichungsnummer: **0 215 965**
**B1**

(12) # EUROPÄISCHE PATENTSCHRIFT

(45) Veröffentlichungstag der Patentschrift:
**11.05.88**

(51) Int. Cl.⁴: **G 11 B 23/023**

(21) Anmeldenummer: **85111504.8**

(22) Anmeldetag: **11.09.85**

(54) **Magazin für Tonbandkassetten.**

(43) Veröffentlichungstag der Anmeldung:
**01.04.87 Patentblatt 87/14**

(45) Bekanntmachung des Hinweises auf die Patenterteilung:
**11.05.88 Patentblatt 88/19**

(84) Benannte Vertragsstaaten:
**AT DE FR GB IT NL SE**

(56) Entgegenhaltungen:
**EP - A - 0 001 143**
**EP - A - 0 143 609**
**DE - A - 2 033 388**
**DE - A - 2 542 622**
**DE - A - 2 734 788**
**US - A - 3 994 551**

(73) Patentinhaber: **Herbert Richter,**
**Metallwaren-Apparatebau GmbH & Co., Birkenfelder**
**Strasse 1-7, D-7530 Pforzheim-Bü (DE)**

(72) Erfinder: **Richter, Herbert, Birkenfelder Strasse 1 - 7,**
**D-7530 Pforzheim - Bü (DE)**

(74) Vertreter: **Trappenberg, Hans, Wendtstrasse 1,**
**D-7500 Karlsruhe 21 (DE)**

ACTORUM AG

## Beschreibung

Die Erfindung betrifft ein Magazin für Tonbandkassetten, insbesondere zur Verwendung in Kraftfahrzeugen, bestehend aus mehreren in einem Gehäuse vorgesehenen liegend angeordneten Kammern, die aus schubladenförmigen, im Gehäuse aufeinander gestapelten Einzelbauteilen gebildet sind und einen die Aufnahme jeweils einer Tonbandkassette ermöglichenden freien Querschnitt aufweisen, mit in jeder Kammer vorgesehenen, in mindestens eine Nabe der Auf- beziehungsweise Abrollspule des Tonbands eingreifenden Fixierkörpern, wobei die Fixierkörper an einer etwa in Einschubrichtung der Kassetten liegenden Federleiste angeordnet sind, und aus mindestens einer, in den Kammerraum hineinragenden, ebenfalls in dieser Richtung liegenden Platte gebildet sind, deren Kanten dachartig verlaufen und damit beidseits Auflauframpen bilden.

Ein derartigs Magazin ist in der DE-A-2 542 622 beschrieben. Die an den dort ebenfalls vorgesehenen Federleisten angebrachten Fixierkörper bestehen jedoch aus quer zur Einschubrichtung liegenden, keilförmig ausgebildeten Platten, die verschwenkbar in der die Kammerdeckel bildenden Platte gelagert und in dieser Lage durch die Federleiste gehalten sind. Beim Einschieben einer Tonbandkassette wird diese querliegende Platte gegen den Druck der Federleiste verschwenkt, so dass das Einschieben ermöglicht wird. Nach dem vollständigen Einschieben der Tonbandkassette soll diese Platte sodann in das Nabenteil der Tonbandkassette eingreifen. Dies bedingt allerdings, dass die Tonbandkassette so tief in die Kammer eingeschoben wird, dass ein Verschwenken der Platte möglich ist. Da Mittel, die die Tonbandkassette aus dieser tiefen Einschublage herausdrükken würden, nicht vorgesehen sind, muss die Kassette noch soweit aus der Kammer herausstehen, dass sie wieder manuell herausgezogen werden kann. Selbst dann jedoch ist ungewiss, ob die verschwenkte Platte tatsächlich in die Nabe der Tonbandkassette eingreift. Ausserdem ist die Herstellung derartiger Magazine, bedingt durch den separat herzustellenden Fixierkörper, der ausserdem jeweils unter die Federleiste zu montieren ist, stark verteuert.

Weiter bekannt ist ein Kassetten-Magazin nach der EP-A-0 001 143, das auf den Federleisten fest angeordnete Fixierkörper aufweist. Diese Fixierkörper bestehen entweder aus einem Dreizack oder aus einer in Einschubrichtung der Tonbandkassette liegenden Platte, deren Kanten dachartig verlaufen. Um ein sicheres Einschnappen dieser Fixierkörper zu erreichen, ist der dachartige Verlauf allerdings verhältnismässig spitz. Dieser Kantenverlauf gewährleistet zwar ein sicheres Eindringen der Fixierkörper in die Naben der Tonbandkassette und erschwert auch das Herausfallen beziehungsweise Herausziehen der Kassette aus dem Magazin, erschwert aber deren Einschieben. Das Zusammenfügen mehrerer dieser Magazine in einem Gehäuse ist nicht vorgesehen. Der komplizierte Mechanismus bei der bekannten Vorrichtung, der deren Herstellung verteuerte, ist damit vollkommen vermieden.

Bekannt ist schliesslich auch noch ein derartiges Magazin nach der US-A-3 994 551, das wiederum an einer Federleiste angeordnete, hier halbrunde Fixierkörper aufweist, durch die ebenfalls ein Verdrehen der Auf- beziehungsweise Abrollspule des Tonbandes verhindert werden soll. Die besondere Form dieser Fixierkörper lässt ein leichtes Einschieben und Herausnehmen der Tonbandkassetten zu. Um ein ungewolltes Herauswandern der Tonbandkassetten aus dem Magazin zu vermeiden, ist eine seitlich angeordnete Sperre, gebildet aus einer federnden Zunge, die endständig eine sich vor die eingeschobenen Tonbandkassette legende Nase trägt, vorgesehen. Zum Herausnehmen der Tonbandkassette muss diese Nase manuell weggedrückt werden, was insbesondere bei in Kraftfahrzeugen angebrachten Magazinen störend ist, da hierzu beide Hände, einmal zum Wegdrücken der Nase, zum anderen zum Ergreifen der Tonbandkassette, benötigt werden.

Die Erfindung hat sich die Aufgabe gestellt, ein derartiges Magazin anzugeben, das

1. die Tonbandkassetten wie auch deren Spulen sicher fixiert,
2. das Einschieben und Herausnehmen der Tonbandkassetten mit einer Hand erlaubt,
3. das wenig Raum einnimmt,
4. die Kassette vor mechanischer Beschädigung und Staub schützt,
5. auf einfache Art und Weise in Kraftfahrzeug anzubringen und
6. letztlich auch wirtschaftlich herstellbar ist.

Erreicht wird dies in erfindungsgemässer Weise dadurch, dass die schubladenförmigen Einzelbauteile jeweils zwei nebeneinander liegende Kammern mit einer der Schmalseite einer Tonbandkassette entsprechenden Einschuböffnung aufweisen, wobei die Kammern durch einen Abstandkasten voneinander getrennt sind und die Seitenteile der schubladenförmig geformten Einzelbauteile und auch der Abstandskasten etwas kürzer sind als die breite Fläche dieses Bauteils, dass an den Schmalseiten der Kammern jeweils in die Kammer hineinreichende federnde Gleitleisten angeordnet sind, dass die Höhe der als Fixierkörper dienenden Platte bis zur Kuppe, wo die dachartig verlaufenden Kanten zusammenlaufen, geringfügig grösser ist als die halbe Kassettenhöhe und die dachartig verlaufenden Kanten etwa in einem Winkel von 50° zur Federleistenebene verlaufen und dass die Federleisten und die Gleitleisten einstückig aus dem Einzelbauteil-Material geformt sind.

Nicht mehr also wie bisher werden die Fixierkörper so ausgebildet, dass sie wie der Konstruktion nach der DE-A-2 542 622 in die Naben hineingeführt werden müssen, sondern so, dass sie wie nach der EP-A-001 143 fest an der Federleiste angebracht sind und durch ihre Gestaltung beim Einschieben der Kassette in die Kammern auf den Fixierkörper auflaufen und letztlich in die Naben der Spulen einschnappen. Durch das Einschnappen der besonders geformten Fixierkörper in die Naben

der Spulen wird gleichzeitig auch die Kassette in der gewünschten Lage fixiert, wird also nicht nur eine Verdrehbewegung der Spulen verhindert, sondern auch ein ungewolltes Herauswandern der Kassetten aus den Kammern. Unterstützt wird diese Fixierung der Kassette durch die angeführten in die Kammern hineinreichenden Gleitleisten, die auf den Schmalseiten der Kassetten aufliegen.

Hervorzuheben ist, dass, durch die erfindungsgemässe Bauweise eine raumsparende Anordnung ermöglicht wird, die den teilweise recht beengten Verhältnissen in Kraftfahrzeugen gerecht wird.

Zur wirtschaftlichen Herstellung des Magazins nach der Erfindung hat es sich bewährt, dass die schubladenförmigen Einzelbauteile jeweils zwei nebeneinanderliegende Kammern aufweisen, wobei die Kammern durch einen Abstandskasten voneinander getrennt sind. Dieser Abstandskasten bildet beim Aufeinanderstapeln der einzelnen Bauteile einen «Pfosten» in der Mitte des Gehäuses, der auf jeden Fall ein Zusammendrücken des Gehäuses verhindert. Ausserdem sollen nach der Erfindung die Seitenteile der schubladenförmig geformten Einzelbauteile und auch der Abstandskasten etwas kürzer sein als die breite Fläche dieses Bauteils. Durch diese Verkürzung wird ein leichtes Herausnehmen beziehungsweise Einstekken der Tonbandkassetten in die Kammern ermöglicht, gleichzeitig aber erreicht, dass durch den verbleibenden Teil der breiten Fläche dieses Bauteils die Kassetten gegen mechanische Beschädigung wie auch gegen Staubeintritt geschützt sind. Den anatomischen Massen entsprechend, kann hierbei der Abstandskasten in einer Breite von 10 bis 15 mm gehalten werden und der Rücksprung der Seitenteile und des Abstandskastens gegenüber der breiten Fläche des Bauteils bei 15 bis 20 mm. Ausserdem ist darauf zu achten, dass dieser verbleibende Teil der breiten Fläche in seinem breiten Mass etwas kleiner ist als die kurze Schmalseite der einzuführenden Kassette, damit beim Ergreifen der Kassette tatsächlich auch nur sie selbst erfasst wird und nicht dieses Magazinteil.

Die Fixierkörper haben die Aufgabe, die Spulen durch Eingriff in die Nabe festzustellen. Hierbei genügt es vollauf, wenn die Fixierkörper soweit eindringen, dass sie in die Zwischenräume zwischen die dort angebrachten Nocken gerade eingreifen. Dadurch wird die Einführbewegung der Federleisten minimiert und damit auch der Platz, der jeweils für eine Kammer beziehungsweise eine Kassettenaufnahme benötigt wird. Diese Erkenntnis berücksichtigend, ist nach der Erfindung vorgesehen, dass die Höhe der Platte bis zur Kuppe, wo die dachartig verlaufenden Kanten zusammenlaufen, geringfügig grösser ist als die halbe Kassettenhöhe und die dachartig verlaufenden Kanten etwa in einem Winkel von 50° zur Federleistenebene verlaufen. Das letzte Merkmal ergibt sich aus der Praxis, da dieser Winkel geeignet ist, ein sanftes Auflaufen der Fixierkörper auf den Kassettenkörper zu ermöglichen und trotzdem, sind die Fixierkörper in die Naben eingeschnappt, diese Naben wie auch die Kassette sicher fixieren.

Dienlich ist hierzu auch, dass nicht nur eine Platte als Fixierkörper vorgesehen wird, sondern dass der Fixierkörper jeweils aus zwei nebeneinander angeordneten Platten besteht, deren gegenseitiger Abstand so bemessen ist, dass der Abstand der Aussenseiten voneinander etwas geringer ist als der Nabendurchmesser. Dadurch greift die Kuppe der dachartig ausgebildeten Platten jeweils seitlich in die Naben ein, so dass die Länge dieser plattenförmigen Teile gegenüber nur einer einzigen Platte, die den gesamten Durchmesser der Nabe ausfüllen muss, verkürzt werden kann.

Um die Nabe hierbei sicher zu fixieren und um auch den Kassettenkörper eindeutig zu halten, hat es sich bewährt, dass an mindestens einer Aussenseite einer Platte eine senkrecht hierzu verlaufende Formleiste, die entsprechend der Kassettenöffnung im Bereich der Nabe geformt ist, angebracht ist.

Insbesondere in Personenkraftwagen genügt in aller Regel jeweils ein in eine der Spulen eingreifender Fixierkörper an einer einzigen Federleiste zum Halten der Spule wie auch zum Halten der Kassette. Insbesondere jedoch in Lastwagen beziehungsweise in hartgefederten Personenwagen empfiehlt es sich, beide Spulen gegen eine Verdrehbewegung zu sichern, wozu nach einer Weiterbildung der Erfindung an einer einzigen Federleiste auch zwei Fixierkörper anzubringen sind. Dies kann dadurch geschehen, dass die über nahezu die gesamte Länge der Kammer reichende Federleiste mit zwei Fixierkörpern bestückt ist, oder auch so, dass aus der Federleiste, die endständig mit einem Fixierkörper versehen ist, eine aus dem Material der Federleiste gebildete Federzunge hervorsteht, die wiederum endständig einen weiteren Fixierkörper trägt. Damit sind die beiden Fixierkörper nahezu unabhängig voneinander, so dass sie auch entsprechend unabhängig in die jeweilige Nahe der Auf- beziehungsweise Abrollspule eingreifen können. Statt dass die Federzunge aus dem Material der Federleiste gebildet ist, kann sie selbstverständlich auch eigenständig an der Kammer befestigt sein und in einen Ausschnitt der Federleiste hineingreifen.

Eine weitere Möglichkeit wird nach der Erfindung darin gesehen, dass zwei Federleisten nebeneinander entweder L-förmig ausgebildet oder im spitzen Winkel zur Kammerlängsachse liegend angeordnet sind, wobei der am freien Ende einer Federleiste angeordneter Fixierkörper in die vordere Nabe und der Fixierkörper an der anderen Federleiste in die hintere Nabe eingreift und die Federleisten entsprechend am rückwärtigen oder vorderseitigen Kammerteil angebracht sind.

Grundsätzlich bestände bei diesen Ausführungen auch die Möglichkeit, dass ein Fixierkörper in die untere Kammer und der andere Fixierkörper in die obere Kammer eingreift. Empfehlenswert jedoch ist, dass der durch die Federleisten beziehungsweise Federzungen ausgeübte Druck jeweils die Schwerkraft unterstützt, die Kassetten also fest an den Boden der jeweiligen Kammern andrückt, die Fixierkörper also jeweils in die unterhalb gelegene Kammer eingreifen.

Die Tonbandkassetten weisen an ihrer Aktivseite eine Verdickung auf. Um trotz dieser Verdickung eine eindeutige Auflage des Kassettenkörpers in der Kammer zu erreichen, können nach der Erfindung an den Breitseiten der gegenüberliegenden Kammerwände längsverlaufende Gleitschienen vorgesehen sein, deren Höhe geringfügig grösser ist als die an der Aktivseite der Tonbandkassette befindliche Verdickung, so dass jeweils die Aktivseite der Tonbandkassette an der rechten Kammerseite anliegt.

Ausserordentlich bewährt hat es sich, dass beim Zusammenbau des Magazins eine Vielzahl schubladenförmiger Einzelbauteile unter Einfügung seitlich, oben und unten anliegender Kunststoffschaum-Platten im Gehäuse aufeinandergestapelt und sodann durch Verbinden der Gehäuseteile im Gehäuse eingepresst werden. Durch das Einfügen der Kunststoffschaum-Platten ergibt sich nicht nur ein Thermoschutz der magazinierten Kassetten, sondern es werden auch Klappergeräusche vermieden beziehungsweise abgeschirmt.

Auf der Zeichnung sind Ausführungsbeispiele des Erfindungsgegenstandes schematisch dargestellt, und zwar zeigen:

Fig. 1 eine Vorderansicht eines derartigen Magazins,

Fig. 2 eine Unteransicht eines Einzelbauteils,

Fig. 3 ebenfalls in Unteransicht eine Federleisten-Variante,

Fig. 4 einen Schnitt nach der Schnittlinie IV/IV der Fig. 3,

Fig. 5 eine weitere Federleisten-Variante,

Fig. 6 einen Schnitt nach der Schnittlinie VI/VI der Fig. 5,

Fig. 7 nochmals eine Federleisten-Variante und

Fig. 8 einen Schnitt nach der Schnittlinie VIII/VIII der Fig. 7.

In einem zweiteiligen Gehäuse 1 sind liegend Kammern 2 zum Einführen von Tonbandkassetten 3 vorgesehen. Die Kammern 2 weisen jeweils rechtsseitig eine grössere Höhe 4 auf als über die restliche Breite 5. Diese Höhendifferenz berücksichtigt die Verdickung der Tonbandkassette 3 an deren Aktivseite. Gleichzeitig ist damit gesichert, dass die Kasette nur in dieser Lage, also die Aktivseite rechts, eingeführt werden kann, so dass sie beim Herausnehmen ohne jedwede Verschwenkbewegung in das Kassetten-Laufwerk einzuführen ist. In die Kammern 2 ragen von oben an einer Federleiste 6 angeordnete Fixierkörper 7 hinein, die beim Einführen einer Kassette 3 nach oben weggedrückt werden und in der Endlage der Kassette 3 in die Naben der Spulen eingreifen. Die nebeneinanderliegenden Kammern 2 sind durch einen Abstandskasten 8, der eine Breite von 10 bis 15 mm aufweist, voneinander getrennt. Dies ermöglicht, zusammen mit dem Rücksprung des Gehäuses beziehungsweise der Seitenteile der Kammern, dass die Kassetten 3 seitlich mit Daumen und Zeigefinger erfasst und aus dem Magazin herausgenommen beziehungsweise in das Magazin eingeführt werden können. Um tatsächlich nur die Kassette zu ergreifen und nicht Teile des Magazins, ist das die Kassette abdeckende Teil der breiten Fläche des Magazins geringfügig kleiner als die kurze Schmalseite der Kassette. An der Unterseite des Gehäuses 1 sind zwei pultförmige Stollen 9 angebracht, die mit ihrer breiten Fläche dem Gehäuse nicht nur einen guten Stand beziehungsweise eine ausreichende Klebefläche zum Ankleben des Gehäuses bieten, sondern das gesamte Gehäuse auch pultförmig etwas aufstellen, so dass das Ergreifen der Kassetten erleichtert ist.

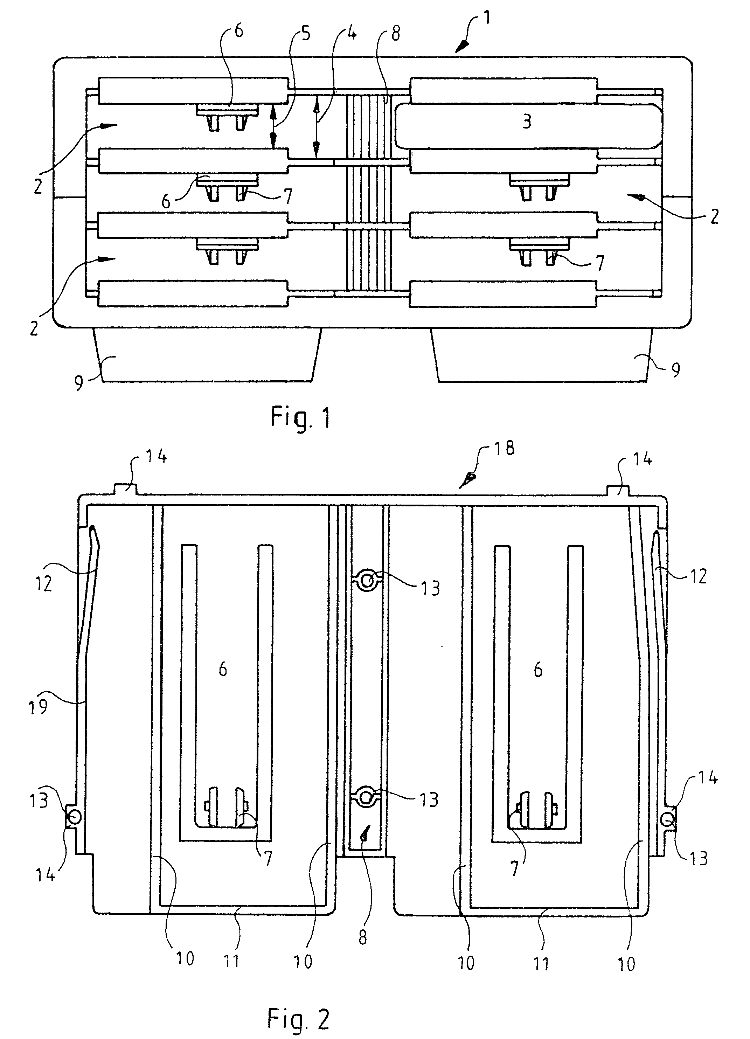

Fig. 2 zeigt die Unteransicht eines Einzelbauteils zur Bilding einer Kammer 2. Hier sind wiederum erkennbar die Federleisten 6 mit den Fixierkörpern 7, wie auch der Abstandskasten 8. Diese Ansicht lässt auch die Anordnung von Gleitschienen 10 erkennen, die längsverlaufend die Verdickung der Tonbandkassetten an deren Aktivseite berücksichtigen. Vorderseitig ist ebenfalls eine querliegende Gleitschiene 11 vorgesehen, die ebenfalls zur sicheren Auflage der Tonbandkassette, jedoch auch dem ästhetischen Abschluss der Kammer 2 dient. Die Gleitschienen 10/11 berücksichtigen nicht nur die Verdickung an der Aktivseite der Tonbandkassette 3, sondern geben auch den Bewegungsspielraum für die Federleiste 6 mit den daran angeordneten Fixierkörpern 7.

An den Aussenseiten dieser schubladenförmig gebildeten Einzelbauteile sind rückwärtig Gleitleisten 12 vorgesehen, die bei eingeführter Kassette auf deren Schmalseite drücken, sie somit fixieren und an die gegenüberliegende Wand andrücken, so dass ein Klappern der Kassetten vermieden wird. Erkennbar aus dieser Darstellung sind auch noch Bohrungen 13, denen gegenüberliegend Zapfen zugeordnet sind, die zum justierten Aufeinanderstapeln der schubladenförmigen Einzelbauteile dienen.

Gegenüber dem Gehäuse 1 werden durch ausgeprägte Stollen 14 Hohlräume geschaffen, in die Kunststoffschaum-Platten zum Thermoschutz sowie zur Schalldämmung einzufügen sind.

Das Einführen einer Kassette 3 in eine Kammer 2 kann nur in der korrekten Lage durchgeführt werden, also mit der Aktivseite der Kassette 3 nach rechts, wo die grössere Höhe 4 der Kammer 2 das Einführen zulässt. Beim Einführen der Kassette 3 wird der an der Federleiste 6 angeordnete Fixierkörper 7 nach oben weggedrückt, gleitet auf den Kassettenkörper der Kassette 3 auf und schnappt letztendlich in die Nabe der in der Darstellung vorderen Spule der Kassette ein. Ist der Fixierkörper 7 dort eingeschnappt, sichert er nicht nur diese Spule gegen Verdrehung, sondern fixiert auch gleichzeitig, zusammen mit der Gleitleiste 12, die Lage der Kassette 3 innerhalb des Magazins 2. Das Einführen der Kassette 3 wie auch deren Herausnehmen ist unschwer dadurch möglich, dass zwischen den nebeneinanderliegenden Kammern der durch den Abstandskasten 8 bedingte Abstand eingehalten ist, so dass die Kassette unschwer mit Daumen und Zeigefinger erfasst werden kann. Ausserdem steht die Kassette 3, wie aus Fig. 1 ersichtlich, beidseitig etwas über, so dass tatsächlich auch nur die Kassette und nicht Kammern- beziehungsweise Gehäuseteile des Magazins nach der Erfindung erfasst werden. Die eingeführte Kassette legt sich bereits durch ihr Gewicht auf die innerhalb der Kammer vorgesehenen Gleitschienen 10/11. Ausserdem wird die Kassette 3 jedoch durch die Federkraft der Federleiste 6 noch in dieser Richtung belastet, so dass, zusammen mit der federnden Gleitleiste 12, mit Sicherheit ein Klappern der Kassette innerhalb der Kammer 2 beziehungsweise des Magazins vermieden wird. Sollte bei extremen Rüttelbewegungen doch ein Verschieben der Kassette gegen diese Federkräfte erfolgen, so werden die dabei entstehenden Geräusche durch die umgebenden Kunststoffschaum-Platten gedämpft.

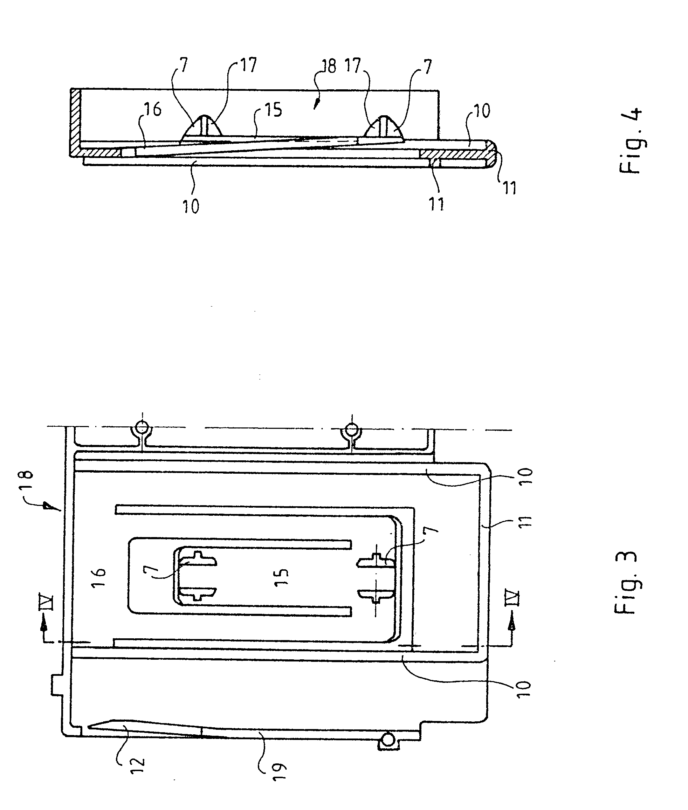

Fig. 3 zeigt eine Variante bei der Anordnung der Fixierkörper 7. Hier ist wiederum eine Federleiste 16 vorgesehen mit einem endständig angeordneten Fixierkörper 7. Ein weiterer Fixierkörper 7, der in die zweite Nabe der Tonbandkassetten-Spule eingreift, ist am freien Ende einer Federzunge 15 angeordnet, die aus dem Material der Federleiste 16 herausgeschnitten ist. Diese Anordnung lässt ein unabhängiges Eingreifen der Fixierkörper 7 in die jeweiligen Naben zu, so dass beide Spulen sicher gegen Verdrehung gesichert sind und ausserdem die Kassette klappersicher fest auf ihre Unterlage gepresst wird.

Aus der Schnittdarstellung nach Fig. 4 ist auch eine Formleiste 17 erkennbar, die an der Aussenseite des Fixierkörpers 7 vorgesehen ist. Diese Formleiste 17 dringt in die Öffnung des Kassettenkörpers bei der jeweiligen Nabe ein und sichert damit die korrekte Lage dieses Kassettenkörpers.

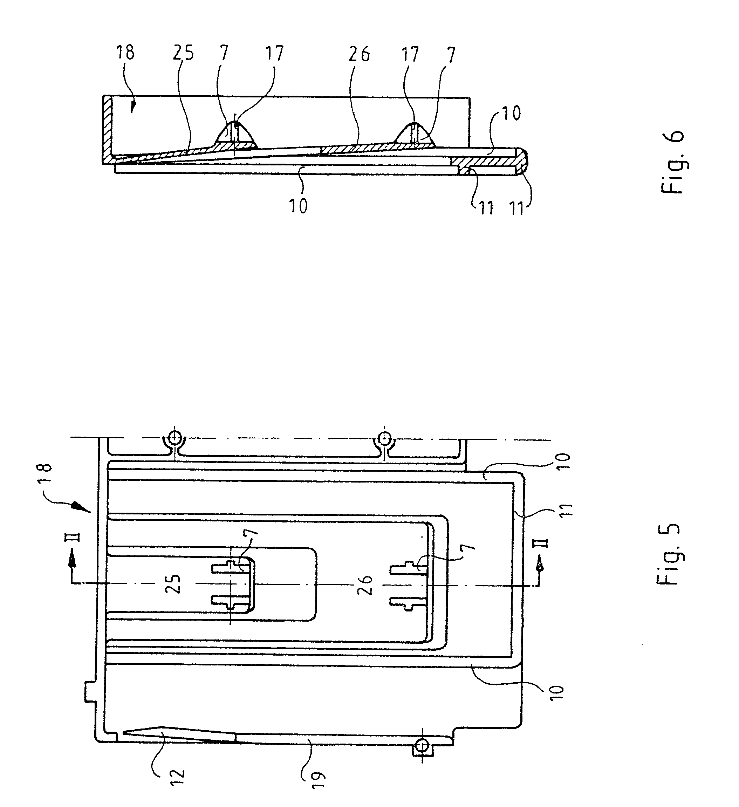

Eine weitere Variante ist in den Fig. 5 und 6 gezeigt. Erkennbar ist wiederum eine Federleiste 26 mit am freien Ende der Federleiste angeordnetem Fixierkörper 7. In einem Ausschnitt 18 in der Federleiste 26 greift eine Federzunge 25, die ebenfalls am freien Ende einen Fixierkörper 7 aufweist. Dieser Fixierkörper 7 an der Federzunge 25 greift in die Nabe der hinteren Tonbandkassetten-Spule ein und sichert diese gegen Verdrehung.

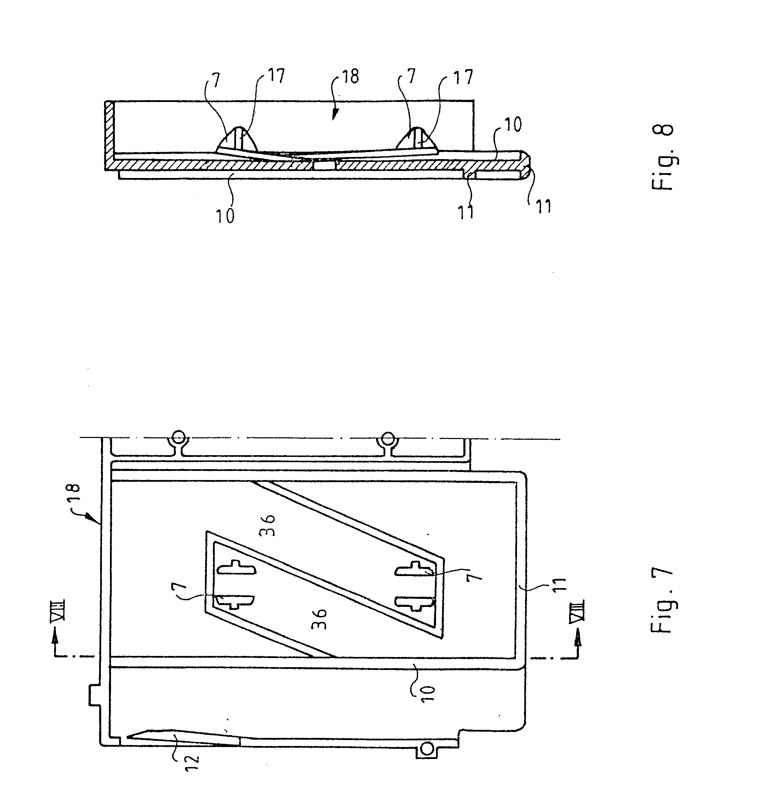

Die Fig. 7 und 8 zeigen eine weitere Möglichkeit der Anordnung von Federleisten 36. Die Wirkung dieser Federleisten beziehungsweise der an ihnen angeordneten Fixierkörper 7 ist selbstverständlich die gleiche wie zuvor beschrieben.

**Patentansprüche**

1. Magazin für Tonbandkassetten, insbesondere zur Verwendung in Kraftfahrzeugen, bestehend aus mehreren in einem Gehäuse (1) vorgesehenen liegend angeordneten Kammern (2), die aus schubladenförmigen, im Gehäuse (1) aufeinander gestapelten Einzelbauteilen (18) gebildet sind und einen die Aufnahme jeweils einer Tonbandkassette (3) ermöglichenden, freien Querschnitt aufweisen, mit in jeder Kammer (2) vorgesehenen, in mindestens eine Nabe der Auf- beziehungsweise Abrollspule des Tonbands eingreifenden Fixierkörpern (7), wobei die Fixierkörper (7) an einer etwa in Einschubrichtung der Kassette (3) liegenden Federleiste (6, 16, 25, 26, 36) angeordnet sind und aus mindestens einer in den Kammerraum hineinragenden, ebenfalls in dieser Richtung liegenden Platte gebildet sind, deren Kanten dachartig verlaufen und damit beidseits Auflauframpen bilden, dadurch gekennzeichnet, dass die schubladenförmigen Einzelbauteile (18) jeweils zwei nebeneinanderliegende Kammern (2) mit einer der Schmalseite einer Tonbandkassette entsprechenden Einschuböffnung aufweisen, wobei die Kammern (2) durch einen Abstandskasten (8) voneinander getrennt sind und die Seitenteile (19) der schubladenförmig geformten Einzelbauteile (18) und auch der Abstandskasten (8) etwas kürzer sind als die breite Fläche (20) dieses Bauteils (18), dass an den Schmalseiten der Kammern jeweils in die Kammer (2) hineinreichende federnde Gleitleisten (12) angeordnet sind, dass die Höhe der als Fixierkörper (7) dienenden Platte bis zur Kuppe, wo die dachartig verlaufenden Kanten zusammenlaufen, geringfügig grösser ist als die halbe Kassettenhöhe und die dachartig verlaufenden Kanten etwa in einem Winkel von 50° zur Federleistenebene verlaufen und dass die Federleisten (6, 16, 25, 26, 36) und die Gleitleisten (12) einstückig aus dem Einzelbauteil-Material geformt sind.

2. Magazin nach Anspruch 1, dadurch gekennzeichnet, dass die Fixierkörper (7) jeweils aus zwei nebeneinander angeordneten Platten gebildet sind, deren gegenseitiger Abstand so bemessen ist, dass der Abstand der Aussenseiten voneinander etwas geringer ist als der Nabendurchmesser der Tonbandkassette.

3. Magazin nach Anspruch 1 oder 2, dadurch gekennzeichnet, dass an mindestens einer Aussenseite einer Platte eine senkrecht hierzu verlaufende Formleiste (17), die entsprechend der Kassettenöffnung im Bereich der Nabe geformt ist, angebracht ist.

4. Magazin nach Anspruch 1, dadurch gekennzeichnet, dass jeweils an einer Federleiste zwei Fixierkörper angeordnet sind, die einmal in die Nabe der Aufrollspule und zum anderen in diejenige der Abrollspule eingreifen.

5. Magazin nach Anspruch 1, dadurch gekennzeichnet, dass aus der endständig mit einem Fixierkörper (7) versehenen Federleiste (16, 26) eine aus dem Material der Federleiste (16, 26) gebildete Federzunge (15, 25) hervorsteht, die wiederum endständig einen weiteren Fixierkörper (7) trägt.

6. Magazin nach Anspruch 1, dadurch gekennzeichnet, dass zwei Federleisten (36) nebeneinander entweder L-förmig ausgebildet oder im spitzen Winkel zur Kammerlängsachse liegend angeordnete Fixierkörper (7) in die vordere Nabe und der Fixierkörper (7) an der anderen Federleiste (36) in die hintere Nabe eingreift und die Federleiste (36) entsprechend am rückwärtigen oder vorderseitigen Kammerteil angebracht sind.

7. Magazin nach Anspruch 1, dadurch gekennzeichnet, dass an den Breitseiten der gegenüberliegenden Kammerwände längsverlaufende Gleitschienen (10), deren Höhe geringfügig grösser ist als die an der Aktivseite der Tonbandkassette befindliche Verdickung, so angeordnet sind, dass jeweils die Aktivseite der Tonbandkassette an der rechten Kammerseite anliegt.

8. Magazin nach Anspruch 1, dadurch gekennzeichnet, dass eine Vielzahl schubladenförmiger Einzelbauteile (18) unter Einfügung seitlich, oben und unten anliegender Kunststoffschaum-Platten im Gehäuse (1) aufeinandergestapelt und im Gehäuse (1) eingepresst sind.

## Claims

1. Container for magnetic-tape cassettes, particularly for use in motor vehicles, the container comprising a plurality of chambers (2) which are arranged in a lying position, are situated in a housing (1), are formed of drawer-shaped structural units (18) stacked one above the other in the housing (1), and have a free cross-section which enables always one cassette (3) to be received therein, fixing bodies (7) being provided in each chamber (2) which engage into at least one hub of the take-up reel or feed reel for the tape, wherein the fixing bodies (7) are arranged on a spring plate (6, 16, 25, 26, 36) which lies approximately in the direction of insertion of the cassette (3) and are formed by at least one plate which extends into the chamber space and lies also in this direction, the edges of the plate extending in the shape of a roof and forming on both sides run-on ramps, characterised in that the drawer-shaped structural units (18) have always two mutually opposite chambers (2) with an insertion opening corresponding to the narrow side of one magnetic-type cassette, the chambers (2) being separated from each other by a spacer casing (8), and the lateral parts (19) of the drawer-shaped structural units (18) and also the spacer casing (8) are somewhat shorter than the wide surface (20) of the structural unit (18), that on the narrow sides of the chambers are arranged springing slide plates (12) extending into the chamber (2), that the height of the plate serving as the fixing body (7) up to the top where the roof-shaped edges meet, is slightly greater than half of the cassette height, and the roof-shaped edges extend at an angel of about 50° to the plane of the spring plate, and that the spring plates (6, 16, 25, 26, 36) and the slide plates (12) are made in one piece from the material of the structural unit.

2. Container according to Claim 1, characterised in that the fixing bodies (7) are formed always by two plates arranged one next to the other, the mutual distance of which is so selected that the distance of the outer sides from each other is somewhat smaller than the hub diameter of the cassette.

3. Container according to Claim 1 or 2, characterised in that on at least one outer side of one plate is provided a shaped plate (17) which extends perpendicularly thereto and is shaped according to the cassette opening in the region of the hub.

4. Container according to Claim 1, characterised in that on one spring plate are always arranged two fixing bodies which engage in the hub of the take-up reel and in the hub of the feed reel.

5. Container according to Claim 1, characterised in that from the spring plate (16, 26), which is provided at the end with a fixing body (7), projects a spring tongue (15, 25) which is made of the material of the spring plate (16, 26) and has at the end a further fixing body (7).

6. Container according to Claim 1, characterised in that two spring plates (36) are arranged one next to the other either in the form of the letter L or at an acute angle to the longitudinal axis of the chamber, while the fixing body (7) provided on the free end of one spring plate (36) engages into the front hub and the fixing body (7) on the other spring plate (36) into the rear hub, and the spring plates (36) are provided correspondingly on the rear or front part of the chamber.

7. Container according to Claim 1, characterised in that longitudinally extending slide rails (10), the height of which is slightly greater than the thickening on the active side of the cassette, are so arranged on the wide sides of the chamber walls situated opposite to each other, that always the active side of the cassette bears onto the right side of the chamber.

8. Container according to Claim 1, characterised in that several drawer-shaped structural units (18) are stacked on top of each other in and pressed into the housing (1) with interposition of plates of plastics foam bearing thereon from the sides, from above and from below.

## Revendications

1. Magasin pour cassettes audio, destiné notamment à une utilisation dans des véhicules automobiles, comprenant plusieurs compartiments (2) qui sont prévus dans un boîtier (1), occupent une position couchée, sont formés par des pièces constitutives individuelles (18) en forme de tiroirs empilées les unes sur les autres dans le boîtier (1), et présentent une section libre permettant de recevoir à chaque fois une cassette audio (3), des corps de fixation (7) étant prévus dans chaque compartiment (2) et venant en prise dans au moins un moyeu de la bobine respective d'enroulement ou de déroulement de la bande sonore, les corps de fixation (7) étant disposés sur une barrette élastique (6, 16, 25, 26, 36) située sensiblement dans la direction d'insertion de la cassette (3), et étant formés par au moins une plaque qui s'engage dans l'espace du compartiment, est également située dans cette direction, et dont les bords s'étendent en forme de toiture et constituent ainsi, de part et d'autre, des rampes d'ascension, caractérisé par le fait que les pièces constitutives individuelles (18) en forme de tiroirs présentent, à chaque fois, deux compartiments juxtaposés (2) munis d'un orifice d'insertion correspondant au petit côté d'une cassette audio, ces compartiments (2) étant séparés l'un de l'autre par l'intermédiaire d'un caisson d'espacement (8), et les parties latérales (19) des pièces constitutives individuelles (18) moulées en forme de tiroir, de même que le caisson d'espacement (8), étant sensiblement plus courts que la face large (20) de cette pièce constitutive (18);

que des lamelles de coulissement élastiques (12), pénétrant à chaque fois dans le compartiment (2), sont disposées sur les petits côtés des compartiments; que, jusqu'au sommet auquel se rencontrent les bords s'étendant en forme de toiture, la hauteur de la plaque servant de corps de fixation (7) est légèrement plus grande que la moitié de la hauteur de la cassette, et les bords s'étendant en forme de toiture forment sensiblement un angle de 50° par rapport au plan des barrettes élastiques; et que les barrettes élastiques (6, 16, 25, 26, 36) et les lamelles de coulissement (12) sont moulées, d'un seul tenant, dans le matériau des pièces constitutives individuelles.

2. Magasin selon la revendication 1, caractérisé par le fait que les corps de fixation (7) sont à chaque fois formés par deux plaques disposées l'une à côté de l'autre, dont l'espacement mutuel est dimensionné de telle sorte que la distance mutuelle des faces externes soit sensiblement plus petite que le diamètre du moyeu de la cassette audio.

3. Magasin selon la revendication 1 ou 2, caractérisé par le fait qu'une membrure moulée (17), ménagée sur au moins une face externe d'une plaque perpendiculairement à laquelle elle s'étend, est configurée en concordance avec l'orifice de la cassette au voisinage du moyeu.

4. Magasin selon la revendication 1, caractérisé par le fait que deux corps de fixation, implantés sur une barrette élastique respective, s'engagent d'une part dans le moyeu de la bobine d'enroulement et, d'autre part, dans celui de la bobine de déroulement.

5. Magasin selon la revendication 1, caractérisé par le fait qu'une languette élastique (15, 25), formée dans le matériau de la barrette élastique (16, 26), fait saillie au-delà de cette barrette élastique (16, 26) munie d'un corps de fixation (7) à son extrémité, et porte à son tour un autre corps de fixation (7) à son extrémité.

6. Magasin selon la revendication 1, caractérisé par le fait que deux barrettes élastiques (36) juxtaposées sont soit réalisées de configuration en L, soit agencées à angle aigu par rapport à l'axe longitudinal du compartiment, le corps de fixation (7) disposé à l'extrémité libre d'une barrette élastique (36) pénétrant dans le moyeu antérieur, et le corps de fixation (7) situé sur l'autre barrette élastique (36) pénétrant dans le moyeu postérieur, les barrettes élastiques (36) étant implantées, d'une manière correspondante, sur la partie postérieure ou antérieure du compartiment.

7. Magasin selon la revendication 1, caractérisé par le fait que des glissières (10), s'étendant longitudinalement sur les côtés larges des parois opposées des compartiments et munies d'une hauteur légèrement plus grande que le renflement situé sur la face active de la cassette audio, occupent des positions telles que la face active de la cassette audio soit appliquée, à chaque fois, contre le côté droit du compartiment.

8. Magasin selon la revendication 1, caractérisé par le fait qu'un grand nombre de pièces constitutives individuelles (18) en forme de tiroirs sont empilées les unes sur les autres dans le boîtier (1) et enchâssées dans ce boîtier (1), avec interposition de plaques en une mousse de matière plastique qui sont appliquées latéralement, en haut et en bas.

Fig. 1

Fig. 2

Fig. 3

Fig. 4

Fig. 6

Fig. 5

Fig. 8

Fig. 7